# EUROPÄISCHE PATENTSCHRIFT

(11) **EP 3 748 206 B1**
(45) Veröffentlichungstag und Bekanntmachung des Hinweises auf die Patenterteilung: **17.11.2021**
(21) Anmeldenummer: 19179080.7
(22) Anmeldetag: 07.06.2019
(51) Int. Cl.: F16K 1/08, F16K 27/02

(54) **HUBVENTIL ZUM STEUERN EINER PROZESSFLUIDSTRÖMUNG**
LIFT VALVE FOR CONTROLLING A PROCESS FLUID FLOW
PROCÉDÉ DE COMMANDE D'UN ÉCOULEMENT DE FLUIDE DE PROCESSUS

(43) Veröffentlichungstag der Anmeldung: 09.12.2020
(73) Patentinhaber: FOCUS-ON V.O.F., 3331 XR Zwijndrecht (NL)
(72) Erfinder: Bhangu, Kavreet, 83052 Bruckmühl (DE); Boer, André H., 3363 CN Sliedrecht (NL); Waid, Jonas, 64293 Darmstadt (DE); Merscher, Michael, 63322 Rödermark (DE); Krüger, Marcel, 61137 Schöneck (DE)
(74) Vertreter: Schmid, Nils T.F.

(56) Entgegenhaltungen:
- EP-B1- 2 890 919
- FI-A- 20 049
- FR-A- 830 827
- US-A- 3 648 718
- US-A- 5 540 415

## Beschreibung

Die Erfindung betrifft ein Ventil zum Steuern einer Prozessfluidströmung einer prozesstechnischen Anlage, wie eine chemische Anlage, beispielsweise eine petrochemische Anlage, ein Kraftwerk, eine Lebensmittel verarbeitende Anlage oder dergleichen.

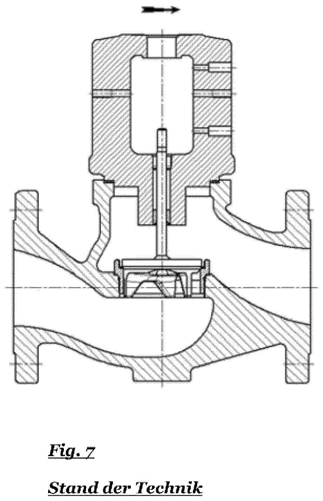

Ein konventionelles Hubventil zeigt Fig. 7. Hubventile haben üblicherweise einen zylinderrohrartigen Eingang und einen zylinderrohrartigen Ausgang, die koaxial zu einer gemeinsamen Ventilachse angeordnet sind. Ein Hubventil verfügt zwischen seinem Eingang und seinem Ausgang über einen Durchgang, der senkrecht zu der Ventilachse angeordnet ist. Dieser Durchgang ist durch ein bewegliches Hubventilglied verschließbar. Das Hubventilglied ist üblicherweise über eine Stellstange direkt oder mittelbar an einem Aktor zum Betätigen des Ventilgliedes angelenkt, wobei sich die Ventilstange senkrecht zu der Ventilachse durch eine Zugangsöffnung des Ventilgehäuses in einen Außenbereich erstreckt, in dem der Aktor ist. Die Zugriffsöffnung kann durch einen Deckel, eine Laterne oder einen Gehäuseabschnitt des Aktors prozessfluiddicht verschlossen sein. Das Ventilglied kann im Allgemeinen als Ventilkegel bezeichnet sein. Hubventile können untergliedert werden in sogenannte Flow-To-Open (FTO) und Flow-To-Close (FTC) Ventile. Flow-To-Open Ventile sind für eine betriebsgemäße Benutzung einer vorbestimmten Fließrichtung des Prozessfluid entsprechend der Öffnungsrichtung des Ventilgliedes ausgelegt. Flow-To-Close Ventile sind für einen betriebsgemäßen Gebrauch mit einer Prozessfluid-Strömungsrichtung entsprechend der Schließrichtung des Ventils ausgelegt. Für den Gebrauch und eine korrekte Montage ist üblicherweise die vorbestimmte betriebsgemäße Strömungsrichtung mit einer deutlich sichtbaren Markierung an der Außenseite des Ventils vermerkt. Die Einlass- und Auslass-Geometrie von Ventilen ist geprägt von dem senkrecht auf der Mittelachse des Ventils angeordnet Ventilglied, das beispielsweise ein Ventilkegel, ein Ventilkolben in Verbindung mit einem Ventilkäfig oder ein anderes Drosselelement sein kann. Der Einlass beschreibt üblicherweise zunächst einen in Vertikalrichtung nach unten bis unterhalb der Durchgangsöffnung und dann aufwärts in Richtung der Durchgangsöffnung gewölbten Bogen. Der Auslass beschreibt eine Bogenwölbung von der Durchgansöffnung nach oben und anschließend abwärts. Die Baulänge üblicher Stellventile ist normiert, sodass für die Umlenkung der Strömung nur ein begrenzter, definierter Bauraum zur Verfügung steht. Durch die Mehrfachumlenkung der Prozessströmung zwischen Einlass und Auslass entsteht zusätzlicher Strömungswiderstand.

Um einer Erhöhung des Strömungswiderstandes wegen des gekrümmten Bereichs im Einlass und der Reibungsverluste an der Rohrwandung entgegenzuwirken, ist es üblich, den Einlassquerschnitt kontinuierlich bis zum Drosselelement hin zu vergrößern. Auf diese Weise soll einer Reduzierung des Durchflussfaktors (Kv-Wert) aufgrund eines erhöhten Widerstandes entgegengewirkt werden. Dies ist beispielsweise beschrieben in US 3,648,718 A. In dem Diagramm (Fig. 6) ist ein beispielhafter Verlauf der Querschnittsflächen des Strömungskanals vom Einlass bis zum Durchgang abgebildet. Es hat sich herausgestellt, dass sich nach ca. 2/3 des Weges zu der Durchgangsöffnung die Prozessfluidströmung ablöst. Je nach Strömungsgeschwindigkeit und Druckdifferenz kann die Ablösung früher oder später stattfinden. Das Undefinierte Ablösen der Strömung von der Kanalwand des Einlasses ist für Wirbelbindung und kann für hohe Strömungsverluste verantwortlich sein. Durch die Wirbelbildung und Rückströmungen im Einlasskanal entstehen undefinierte, sich ändernde Strömungswiderstände. Dadurch kann der Eingangsdruck unmittelbar vor dem Durchgang, der durch das Ventilglied verschließbar ist (dieser Bereich kann auch als Drosselstelle bezeichnet werden), erheblich von einem angenommenen Druck abweichen. Das kann zur Folge haben, dass eine anschließende Druckreduktion stromabwärts der Durchgangsöffnung einen gewünschten Ausgangsdruck oder Ausgangsdurchfluss nicht erreicht.

EP 2 890 919 B1 beschreibt ein Hubventil, bei dem von einem Einlass bis zu dem Durchgang ein Knie-Leitungsabschnitt vorgesehen ist, der einen kreisförmigen Querschnitt hat und dessen Leitungsdurchmesser in einem geraden, zylindrischen Leitungsabschnitt kleiner ist als der Durchmesser der Durchgangsöffnung. Der Durchmesser des Querschnitts soll dabei graduell von dem Durchmesser am Einlass zu dem Leitungsdurchmesser am Durchgang abnehmen. Die beschriebene Leitungsgeometrie soll eine Verringerung von turbulenten Wirbelströmungen insbesondere unterhalb der Durchgangsöffnung zu Folge haben. Dennoch treten auch bei dem in EP 2 890 919 B1 beschriebenen Ventil stellenweise turbulente Strömungen auf, die unerwünschte Widerstände bilden und Geräusche verursachen. Ferner bedarf ein solches Ventil eines verhältnismäßig großen Bauraums.

Ist eine Aufgabe der Erfindung, die Nachteile des Stands der Technik zu überwinden, insbesondere ein Ventil bereitzustellen, das Rückströmung und/oder Wirbelbildung im Einlassbereich zuverlässig vermeidet, insbesondere ohne Beeinträchtigung des Kv Werts des Ventils, und das keiner Vergrößerung des Bauraums bedarf.

Diese Aufgabe löst der Gegenstand des unabhängigen Anspruchs 1. Demnach umfasst ein Hubventil zum Steuern einer Prozessfluidströmung einer prozesstechnischen Anlage eine Eingangsöffnung, ein Hubventilglied, eine Durchgangsöffnung und einem Strömungskanal, der sich von der Eingangsöffnung zu der Durchgangsöffnung erstreckt und einen Strömungsquerschnitt definiert. In einem geöffneten Ventilzustand kann das Prozessfluid in einer Strömungsrichtung durch das Hubventil fließen. Die Eingangsöffnung hat einen kreisförmigen Öffnungsquerschnitt und sie definiert eine Ventilachse. Die Ventilachse kann einer Horizontalrichtung entsprechen. Das Hubventilglied ist in einer Vertikalrichtung quer, insbesondere senkrecht, zur Ventilachse beweglich. Mittels einer in Vertikalrichtung über dem Ventilglied angeordneten Ventilstange ist das Hubventilglied an einem Aktor zum Betätigen des Hubventilglieds anbindbar. Die Durchgangsöffnung hat einen kreisförmigen Durchgangsöffnungsquerschnitt. Dieser anfängliche Durchgangsöffnungsquerschnitt kann über einen Eingangsbereich zylindrisch ausgebildet sein, nach welchem der gekrümmte Strömungskanal beginnt. Die Anordnung des Ventilgliedes kann auch außermittig ausgeführt sein, sodass der Einlassbereich länger ausgebildet ist. Besonders in diesem Falle existiert genug Bauraum für den anfänglichen zylindrischen kreisförmigen Abschnitt.

In einer in Vertikalrichtung untersten Betätigungsstellung (oder: Schließstellung) verschließt das Hubventilglied die Durchgangsöffnung. Wenn das Ventilglied in der untersten Betätigungsstellung angeordnet ist, befindet sich das Ventil in einem geschlossenen Zustand. Zum Öffnen des Ventils kann sich das Ventilglied in Vertikalrichtung nach oben bewegen und eine Betätigungsstellung oberhalb der Schließstellung einnehmen. Der Strömungskanal verbindet die Durchgangsöffnung fluidisch mit der Eingangsöffnung. Der Strömungsquerschnitt des Strömungskanals kann entlang einer Schnittebene senkrecht zu einer Strömungsmittelpunktlinie des Strömungskanals und/oder senkrecht zur Ventilachse aufgespannt ist.

Erfindungsgemäß sinkt die Flächengröße des Strömungsquerschnitts in einem ersten Abschnitt von der Eingangsöffnung in einer Strömungsrichtung zu einer Übergangsstelle. Die Flächengröße des Öffnungsquerschnitts der Eingangsöffnung kann die größtmögliche Flächengröße des Strömungskanals bestimmen. Vorzugsweise ist jeder in Strömungsrichtung hinter dem Öffnungsquerschnitt liegende Strömungsquerschnitt von kleinerer Flächengröße als der Öffnungsquerschnitt. Insbesondere nimmt die Flächengröße des Strömungskanals im ersten Abschnitt in Strömungsrichtung kontinuierlich ab. Erfindungsgemäß ist der Strömungsquerschnitt zumindest in dem ersten Abschnitt kontinuierlich oval geformt. Eine "ovale" Form kann eine beliebige, von einer rotationssymmetrischen Kreisform abweichende, insbesondere konvexe, gerundete und/oder gekrümmte Querschnittsform sein, beispielsweise eine Eiform, eine Ellipsenform oder ein abgerundetes Polygon. Die Umfangsform eines ovalen Querschnitts besteht aus in einander übergehenden Kreisbögen, insbesondere Kreisbögen unterschiedlicher Krümmung, und/oder Geraden. Der Übergang zwischen an einander angrenzenden Kreisbögen und/oder Geraden ist stufenlos. Vorzugsweise ist die ovale Form des Strömungsquerschnitts zumindest abschnittsweise, insbesondere stets, spiegelsymmetrisch zu einer von Vertikalrichtung und Horizontalrichtung aufgespannten Spiegelebene.

Ferner ist der erste Abschnitt des Strömungskanals erfindungsgemäß kontinuierlich in Vertikalrichtung nach unten geneigt. Die Neigung kann den unteren Teilbereich (den Boden) des Strömungskanals und/oder den oberen Teilbereich (das Dach) des Strömungskanals betreffen.

In Strömungsrichtung nach einer Übergangsstelle bis zu der Durchgangsöffnung erstreckt sich ein zweiter Abschnitt des Strömungskanals. In dem zweiten Abschnitt, insbesondere vertikal unterhalb der Durchgangsöffnung, kann die Flächengröße des Strömungskanals im Wesentlichen gleich bleiben. Im Wesentlichen gleichbleibend kann bedeuten, dass der Strömungsquerschnitt sich in dem, insbesondere gesamten, zweiten Abschnitt um weniger als ±5% ändert, insbesondere bezogen auf die Flächengröße des Öffnungsquerschnitts. Gemäß einer Ausführung kann die Flächengröße des Strömungsquerschnitts in dem zweiten Abschnitt wenigstens gleich bleiben oder, insbesondere kontinuierlich, steigen. Der Strömungsquerschnitt kann insbesondere ausschließlich in dem ersten Abschnitt bis zu der Übergangsstelle oval geformt sein. Alternativ kann der Strömungsquerschnitt in dem ersten Abschnitt und in dem zweiten Abschnitt oval geformt sein.

Bei einer Ausführung der Erfindung nimmt im ersten Abschnitt im Verlauf des Strömungskanals in Strömungsrichtung die Höhe des Strömungskanals in Vertikalrichtung kontinuierlich ab und die Breite des Strömungskanals in einer Querrichtung quer zur Vertikalrichtung und zur Vertikalachse nimmt kontinuierlich zu. Es kann bevorzugt sein, dass die Höhe des Strömungskanals stetig abnimmt. Es kann bevorzugt sein, dass die Breite des Strömungskanals stetig abnimmt. Gemäß einer Alternative kann die Breite des Strömungskanals in einem Eingangsbereich angrenzend an die Eingangsöffnung konstant sein, wobei die Breite des Strömungskanals nach dem Eingangsbereich kontinuierlich, insbesondere stetig zunimmt. Eine kontinuierliche Zunahme beschreibt einen Verlauf, entlang dem ein Maß, wie eine Breite oder eine Höhe, das kontinuierlich zunimmt, stets entweder gleich bleibt oder zunimmt. Ein kontinuierlich abnehmendes Maß nimmt entlang eines kontinuierlichen Verlaufs stets entweder ab oder bleibt gleich. Es kann bevorzugt sein, dass die Höhenabnahme größer ist als die Breitenzunahme, etwa derart, dass eine durch die Breite und die Höhe definierte ovale Fläche insgesamt an Flächengröße abnimmt.

Bei einer bevorzugten Weiterbildung der Erfindung nimmt die Breite des Strömungskanals im zweiten Abschnitt im Verlauf des Strömungskanals in Strömungsrichtung bis zu einer Maximalbreite zu. Die Maximalbreite kann im Bereich der Durchgangsöffnung angeordnet sein. Die Maximalbreite kann die Mittelpunktslinie der Durchgangsöffnung kreuzen.

Gemäß einer Weiterbildung der Erfindung kann ein Verhältnis vom Durchmesser der Eingangsöffnung relativ zu der Maximalbreite des Strömungskanals wenigstens 0,75 ±0,05 betragen. Der Verlauf der Breite der des Strömungskanals von der Eingangsöffnung bis zu der Maximalbreite kann durch einen Verbreiterungswinkel bestimmt sein. Ein Verbreiterungswinkel kann insbesondere kleiner als 15°, vorzugsweise 10° ± 3° sein.

Gemäß einer bevorzugten Ausführung der Erfindung erfährt der Strömungsquerschnitt im ersten Abschnitt eine Verkleinerung der Flächengröße relativ zur Flächengröße des Öffnungsquerschnitts um wenigstens 10 % und/oder um höchstens 30 %. Vorzugsweise kann der Strömungsquerschnitt im ersten Abschnitt eine Verkleinerung der Flächengröße von 20% erfahren. Gemäß einer speziellen Ausführung erfährt der Strömungsquerschnitt des Strömungskanals entlang seines gesamten Verlaufes von der Eingangsöffnung zu der Durchgangsöffnung eine Verkleinerung der Flächengröße relativ zu der Flächengröße des Öffnungsquerschnitts an der Eingangsöffnung von nicht mehr als 30 %, vorzugsweise nicht mehr als 25 %, besonders bevorzugt nicht mehr als 20 %.

Gemäß einer bevorzugten Ausführung der Erfindung kann der Strömungskanal einen in Vertikalrichtung untersten Scheitelpunkt aufweisen, der in Horizontalrichtung von einer geraden in Vertikalrichtung durch den Mittelpunkt der Durchströmungsöffnung versetzt angeordnet ist. Der unterste Scheitelpunkt des Strömungskanals kann den untersten Scheitelpunkt einer bezogen auf die Ventilachse A konvexen Strömungskanal-Wölbung sein. Insbesondere ist der Scheitelpunkt an einem in Horizontalrichtung vorderem Ende der Durchgangsöffnung oder in Horizontalrichtung zwischen dem vorderem Ende der Durchgangsöffnung und der geraden angeordnet.

Gemäß einer bevorzugten Ausführung der Erfindung kann ein Verhältnis von einem Durchmesser der Eingangsöffnung relativ zu einer vertikalen Höhe des Strömungskanals an der Übergangsstelle wenigstens 1,55 ± 0,10 betragen. Alternativ oder zusätzlich kann ein Verhältnis von einem Durchmesser der Eingangsöffnung relativ zu einer vertikalen Höhe des Strömungskanals am Scheitelpunkt wenigstens 1,55 ± 0,10 betragen.

Gemäß einer bevorzugten Ausführung der Erfindung hat der Strömungskanal einen in Vertikalrichtung oberen Teilbereich, der im Verlauf des Strömungskanals in Strömungsrichtung im ersten Abschnitt eine abnehmende Flächengröße aufweist. Insbesondere kann die Abnahme der Flächengröße im oberen Teilbereich des Strömungskanals die gesamte Abnahme der Flächengröße des Strömungskanals im ersten Abschnitt bestimmen. Die Abnahme der Flächengröße kann insbesondere relativ zu der Flächengröße an der Eingangsöffnung des Hubventils definiert sein.

Gemäß einer bevorzugten Ausführung der Erfindung ist der Strömungsquerschnitt im ersten Abschnitt zumindest abschnittsweise Teilkreisförmig. Im ersten Abschnitt des Verlaufs des Strömungskanals in Strömungsrichtung flacht eine Teilkreis-Krümmung des Strömungsquerschnitts im oberen Teilbereich zumindest abschnittsweise ab. Die Krümmung beschreibt im Sinne dieser Anmeldung die Gestalt der Wandung des Strömungskanals in einer Querschnittsfläche senkrecht zur Ventilachse und/oder senkrecht zu einer Strömungsmittelpunktlinie.

Gemäß einer bevorzugten Weiterbildung ist der Strömungsquerschnitt an der Übergangsstelle im oberen Teilbereich des Strömungskanals konkav entlang des Verlaufs des ersten Abschnitts des Strömungskanals kann der obere Teilbereich vollständig oder zumindest überwiegend (entlang zumindest 75 %, insbesondere zumindest 90 % der Länge des ersten Abschnitts) konvex gekrümmt sein. In dem zweiten Abschnitt des Strömungskanals kann dieser zumindest abschnittsweise im oberen Teilbereich einen flachen, insbesondere eben horizontalen, Strömungsquerschnitts-Teilbereich definieren

In Strömungsrichtung nach der Übergangsstelle kann sich der obere Teilbereich des Strömungskanals in dem zweiten Abschnitt horizontal erstrecken. Insbesondere erstreckt sich der obere Teilbereich des Strömungskanals nach der Übergangsstelle in einer Ebene, die von einer Horizontalrichtung und einer Querrichtung aufgespannt ist.

Gemäß einer bevorzugten Ausführung der Erfindung hat der Strömungskanal einen in Vertikalrichtung unteren Teilbereich, der im Verlauf des Strömungskanals in Strömungsrichtung kontinuierlich halbkreisförmig ist. Zwischen dem oberen Teilbereich und dem unteren Teilbereich kann ein abgerundeter, radiusartiger Übergangsbereich vorgesehen sein. Der halbkreisförmige untere Teilbereich (Halbkreisbereich) kann sich entlang einem Bogenwinkel von 180° ±40°, insbesondere 180 ° ±20°, vorzugsweise 180° ±10° erstrecken. Die Krümmung des unteren Halbkreisbereichs kann entlang des bogenförmigen Strömungsverlaufs kontinuierlich, insbesondere konstant sein. Der Krümmungsradius des Halbkreisbereichs kann im Wesentlichen dem Kanalradius, d. h. der Hälfte der Kanalbreite entsprechen. Es ist denkbar, dass im Verlauf in Strömungsrichtung die Krümmung des unteren Teilbereichs steigt. Der Teilkreisbereich kann aus mehreren tangential an einander angrenzenden Radien bestehen. Eine elliptische Teilkreisform kann somit entstehen.

Gemäß einer Ausführung der Erfindung weist der erste Abschnitt des Strömungskanals einen unteren Neigungswinkel von etwa 25° oder weniger auf. Der obere Teilbereich und der untere Teilbereich können entlang ihrer gesamten Erstreckung in dem ersten Abschnitt des Strömungskanals eine Neigung in Vertikalrichtung nach unten aufweisen. Es kann bevorzugt sein, dass der Strömungskanal im ersten Abschnitt in Strömungsrichtung in seinem oberen Teilbereich eine stärkere Neigung hat als in seinem unteren Teilbereich. Die Neigung des oberen Teilbereichs kann insbesondere 45° ±10° betragen. Die Neigung des unteren Teilbereichs kann vorzugsweise 20° bis 30° betragen. Insbesondere kann der untere Neigungswinkel kleiner als 25 ° sein, beispielsweise 20°±3°. Der Neigungswinkel kann insbesondere in einer Querschnittsebene, die sich in Vertikalrichtung und Horizontalrichtung aufspannt, bestimmt werden. Im Vergleich zu herkömmlichen Ventilen ist die Neigung des Strömungskanals, insbesondere des unteren Teilbereichs, merklich reduziert. Auf diese Weise kann gewährleistet werden, dass das Prozessfluid entlang des Strömungsverlaufes von der Eingangsöffnung zur Durchgangsöffnung eine verhältnismäßig geringfügige Umlenkung erfährt. Dank der verringerten Neigung kann eine geringere Reibung der Prozessfluidströmung einhergehen. Ferner kann eine verringerte Neigung bewirken, dass Strömungsablösung von der Kanalwand vermieden wird. In der Ebene, in der die Neigung definiert ist, kann auch eine Wölbung des Kanals definiert sein. Im Allgemeinen wölbt sich ein Strömungskanals eines gattungsgemäßen Hubventils zunächst in Vertikalrichtung abwärts, um sich anschließend in Vertikalrichtung aufwärts zu wölben, hin zu der Durchgangsöffnung. Der Neigungswinkel kann an einem Wendepunkt der Wölbung definiert sein. Der obere Neigungswinkel kann an einer Schnittstelle des oberen Teilbereichs und der Ventilachse definiert sein.

Die erfindungsgemäße Verwendung des Hubventils als Flow-To-Open Ventil ist wichtig, weil bei dieser Auslegung in dem Messbereich, vorzugsweise im zweiten Abschnitt des Strömungskanals, das Ventilglied, insbesondere Ventilkolben, und eine Ventilstange, praktisch keinen Einfluss auf die Strömungsverhältnisse haben, da sich Ventilglied und Ventilstange Strömungsrichtung stromabwärts des Messbereichs befinden. Ferner erfolgt bei der Ausführung als Flow-To-Open Hubventils die Öffnungs- bzw. Schließ-Bewegung des Ventilgliedes im Auslassbereich. Auf diese Weise kann eine präzise Messung, beispielsweise Durchflussmessung, in dem Messbereich, insbesondere im ersten Abschnitt, gewährleistet sein.

Weitere Aspekte der Erfindung sind in den Unteransprüchen angegeben. Weitere Vorteile, Merkmale und Aspekte der Erfindung sind durch die folgende Beschreibung einer bevorzugten Ausführung der Erfindung anhand der beiliegenden Zeichnungen erläutert, in denen zeigen:
- Figur 1: eine Schnittansicht eines erfindungsgemäßen Hubventils;
- Figur 2: eine Detailansicht des Strömungskanals des erfindungsgemäßen Hubventils nach Figur 1;
- Figur 3a: eine Querschnittsansicht des kreisförmigen Öffnungsquerschnitt am Einlass des erfindungsgemäßen Hubventil entlang der Schnittlinie a-a nach Figur 2;
- Figur 3b: eine Querschnittsdarstellung des Strömungskanals entlang der Schnittlinie b-b nach Figur 2;
- Figur 3c: eine Querschnittsdarstellung entlang der Schnittlinie c-c nach Figur 2;
- Figur 3d: eine Querschnittsdarstellung entlang der Schnittlinie d-d nach Figur 2;
- Figur 3e: eine Querschnittsdarstellung entlang der Schnittlinie e-e nach Figur 2;
- Figur 3f: eine Querschnittsdarstellung entlang der Schnittlinie f-f nach Figur 2;
- Figur 3g: eine Querschnittsdarstellung entlang der Schnittlinie f-f nach Figur 2;
- Figur 4: eine andere detaillierte Querschnittsdarstellung des Strömungskanals eines erfindungsgemäßen Hubventils nach Figur 1;
- Figur 5: eine Schnittdarstellung des Strömungskanals eines erfindungsgemäßen Hubventils nach Figur 1 in einer horizontalen Schnittebene;
- Figur 6: ein schematisches Diagramm der Flächengröße des Strömungsquerschnitts des Strömungskanals eines erfindungsgemäßen Hubventils nach Figur 1 und eines konventionellen Hubventil; und
- Figur 7: ein konventionelles Hubventil.

In der nachfolgenden Beschreibung der in den Figuren dargestellten Ausführungen sind zur Vereinfachung der Lesbarkeit dieselben oder ähnliche Komponenten mit denselben oder ähnlichen Bezugszeichen versehen. Die Richtungsbezeichnungen "vertikal", "horizontal" und "quer" sind in Relation zu einander zu verstehen, wobei die angegebenen Richtungen wechselseitig senkreicht aufeinander stehen. Die Schnitte sind parallel zur Ebenen Q V oder zu dieser geneigt.

Ein erfindungsgemäßes Hubventil ist im Allgemeinen mit der Bezugsziffer 1 bezeichnet.

Als wesentliche Komponenten umfasst das Hubventil 1 eine kreisförmige Einlassöffnung 3, eine kreisförmige Durchgangöffnung 5 und einem Strömungskanal 7, der sich von der Einlassöffnung 3 zu der Durchgangöffnung 5 erstreckt. Ferner umfasst das Hubventil 1 eine Austrittsöffnung 6. Die kreisförmige Einlassöffnung 3 und die Auslassöffnung 6 sind koaxial zu einander auf einer gemeinsamen Ventilachse A angeordnet. Die Ventilachse A verläuft durch den Kreismittelpunkt der Einlassöffnung 3. Die Auslassöffnung 6 kann ebenfalls kreisförmig sein.

Das Hubventil 1 umfasst ein Ventilgehäuse 2. An der Eingangsöffnung 3 und an der Ausgangsöffnung 6 kann das Gehäuse 2 mit vorzugsweise normierten Rohrflansch-Stutzen ausgestattet sein. Mittig in dem Ventilgehäuse 2, in Strömungsrichtung F zwischen der Einlassöffnung 3 und der Auslassöffnung 6, ist die mit einem Ventilglied 11 verschließbare Durchgangöffnung 7 vorgesehen. Die Anordnung des Ventilgliedes kann auch außermittig ausgeführt sein, sodass der Einlassbereich länger ausgebildet ist. Die kreisförmige Durchgangöffnung 5 kann durch eine Durchgangsbohrung in dem Ventilgehäuse 2 gebildet sein. An der Durchgangsöffnung 5 kann das Ventil 1 mit einem ringförmigen Ventilsitz 24 ausgestattet sein, der die Durchgangsöffnung 5 belegt und eine definierte Schließ- und/oder Öffnungspaarung mit dem Ventilglied 11 bereitstellt. Es sei klar, dass bei einer anderen erfindungsgemäßen Ausführung, die nicht näher dargestellt ist, alternativ oder zusätzlich beispielsweise ein hohlzylindrischer Ventilkäfig sowie gegebenenfalls ein kolbenartiges Käfigventilglied vorgesehen sein kann. Es ist denkbar, dass das Ventilglied 11 eine andere als die abgebildete Gestalt aufweist, beispielsweise kegelförmig oder teilsphärisch ist.

Das Ventilglied 11 ist zu seiner Betätigung mit einer Ventilstange 13 verbunden. Die Ventilstange 13 erstreckt sich in Vertikalrichtung V aus dem Gehäuse 2 hinaus. Zur Montage des Ventilsitzes 24 sowie zum Einsetzen der Ventilstange 13 und des Ventilgliedes 11 kann das Gehäuse 2 mit einem lösbar abdichtend befestigbaren Deckel 21 ausgestattet sein. Der Deckel 21 kann, wie abgebildet, in Funktionsunion mit einer dynamischen Dichtung zum abdichtenden Herausführen der Ventilstange 13 aus dem fluidführenden Innenbereich des Ventils 1 und/oder einer in Vertikalrichtung V darüber angeordneten Laterne zur Befestigung eines Stellaktors, wie eines pneumatischen oder elektrischen Stellaktors (nicht näher dargestellt) zum Betätigen des Ventilgliedes 11 gebildet sein.

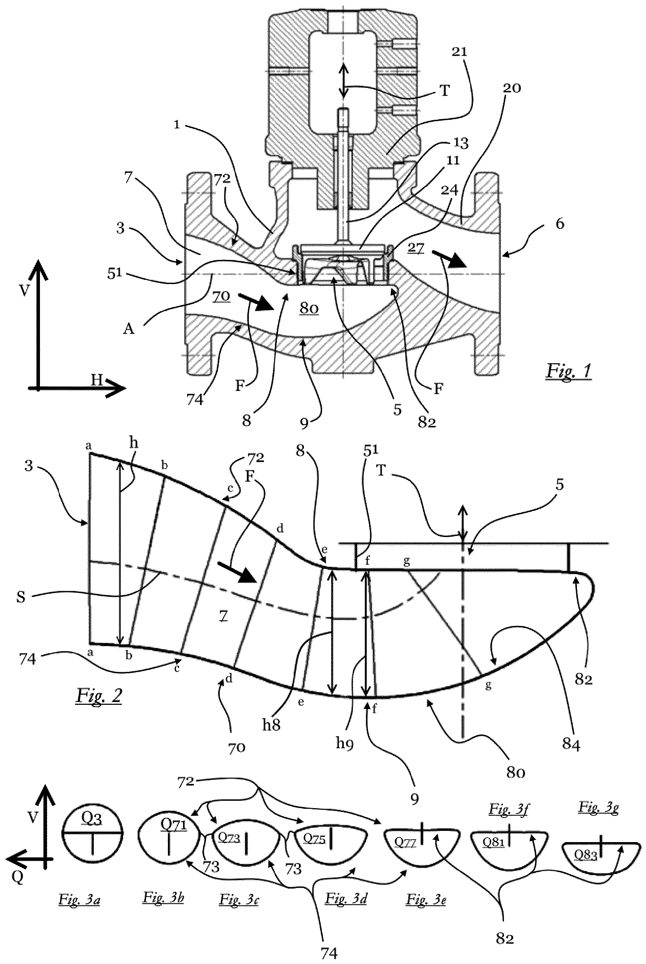

In der in Figur 1 dargestellten betriebsgemäßen Stellung befindet sich das Ventilglied 11 in einer Schließstellung, in welcher das Ventilglied 11 in einem abdichtend verschließenden Berührkontakt dem Ventilsitz 24 angeordnet ist. Das Ventilglied 11 kann mittels der Ventilstange 13 transversalbeweglich T in Vertikalrichtung V gelagert sein. Eine Bewegung des Ventilgliedes 11 in Vertikalrichtung nach oben kann als Öffnungsbewegung bezeichnet werden. Eine Bewegung des Ventilgliedes 11 in Vertikalrichtung V nach unten kann als Schließbewegung bezeichnet sein.

Die Einlassöffnung 3 und die Auslassöffnung 6 können planparallel zueinander ausgerichtet sein. Die Einlassöffnung 3 und/oder die Auslassöffnung 6 erstrecken sich bevorzugt in einer Ebene, die sich in Vertikalrichtung V und Querrichtung Q senkrecht zu einer Horizontalrichtung H ausdehnt. Die Durchgangöffnung 5 erstreckt sich bevorzugt in einer horizontalen Ebene, die sich in Horizontalrichtung H und Querrichtung Q senkrecht zur Vertikalrichtung V ausdehnt. Zum Öffnen und Schließen des Hubventils 1 ist das Ventilglied 11 in Vertikalrichtung V auf und ab beweglich.

Strömungsrichtung F verläuft bei dem erfindungsgemäßen Hubventil 1 von der Einlassöffnung 3 durch die Durchgangsöffnung 5 zu der Auslassöffnung 7. In dem in Figur 1 abgebildeten geschlossenen Zustand verschließt das Ventilglied 11 abdichtend die Durchgangsöffnung 5, sodass sich praktisch kein Prozessfluid-Volumenstrom vom Einlass 13 Auslass 6 bewegen kann. Sobald das Ventilglied 11 die abdichtenden Schließstellung gemäß Figur 1 lässt, kann ein Volumenstrom des Prozessfluides von der Einlassöffnung 3 Strömungskanal 7 zu den Durchgangöffnung 5, durch die Durchgangöffnung 5 und von der Durchgangöffnung 5 entlang eines Auslasskanals 27 in Strömungsrichtung F zu der Auslassöffnung 6 fließen. Die Öffnungsbewegung des Ventilglieds 11 erfolgt im Auslasskanal 27.

Bei dem erfindungsgemäßen Hubventil 1 ist die Strömungsrichtung F des Prozessfluides derart vorbestimmt, dass bei geöffneter Ventilstellung die in Strömungsrichtung F um das Ventilglied 11 und/oder durch die Durchgangöffnung 5 der Richtung der Öffnungsbewegung des Ventilgliedes 11 entspricht. Das erfindungsgemäße Hubventil 1 kann insofern als Flow-To-Open Hubventil bezeichnet sein. Der Fachmann versteht, dass die vorbestimmte Strömungsrichtung eine eindeutige Montage des erfindungsgemäßen Hubventils 1 in einer prozesstechnischen Anlage vorgibt, von der nicht abzuweichen ist, weil ansonsten nicht die vorgegebene ordnungsgemäße Funktion des erfindungsgemäßen Hubventils nicht gegeben ist.

Bei einer besonders bevorzugten Ausführung des erfindungsgemäßen Hubventils ist dieses in einer prozesstechnischen Anlage eingesetzt als Messventil, insbesondere als Strömungsmessventil, zur präzisen Bestimmung von Prozessfluid-Messgrößen, beispielsweise einem Prozessfluid-Volumenstrom, einer Prozessfluid-Strömungsgeschwindigkeit und/oder einem Prozessfluid-Druck vorgesehen. Zu diesem Zweck kann in einem Abschnitt 70, 80 des Strömungskanals 7, insbesondere unterhalb der Durchgangöffnung 5, ein Präzisionssensor oder mehrere Präzisionssensoren zum Bestimmen der Prozessfluid-Messgröße(n) vorgesehen sein (nicht näher dargestellt). Präzisionsmesswerkzeuge erfordern kontrollierte, möglichst konstante Umgebungsbedingungen. Als Präzisionssensor kann beispielsweise ein Ultraschallsensor dienen. Dank der nachfolgend beschriebenen erfindungsgemäßen Ausführung des Flow-To-Open Hubventils 1 ist gewährleistet, dass in dem Strömungskanal 7 und insbesondere dessen Eingangsbereich 70 konstante Umgebungsbedingungen herrschen, die den Einsatz von Präzisionsmessgeräten erlauben. Dank der erfindungsgemäßen Konstruktion kann gewährleistet sein, dass gesamte Strömungskanal, insbesondere der Einlassabschnitt 70 und/oder der Abschnitt 80 unterhalb der Durchlassöffnung 5, frei oder zumindest nahezu frei von Prozessfluid-Wirbeln und/oder Strömungsablösung ist.

Bei dem erfindungsgemäßen Hubventil 1 hat der Strömungskanal 7 eine ovale Querschnittsform. Als oval kann jede rundliche, von der Kreisform abweichende Querschnittsform bezeichnet sein. Für die ovale Querschnittsform des Strömungskanals 7 kann charakteristisch sein, dass sie sich zusammensetzt aus einem unteren Teilbereich 74 mit einer ersten charakteristischen bogenförmigen, kontinuierlichen Krümmung, einem zweiten, oberen Teilbereich 72 mit einer zweiten charakteristischen bogenförmigen, kontinuierlichen Krümmung. Im Verlauf in Strömungsrichtung F kann die zweite Krümmung des oberen Teilbereichs 72 kontinuierlich abflachen. Im Verlauf des Strömungskanals 7 in Strömungsrichtung F kann die erste Krümmung des unteren Teilbereichs 74 zu- oder abnehmen. Der Krümmungsradius des unteren Teilbereichs ist stets größer als der des oberen Teilbereichs 72.

Zwischen dem unteren Teilbereich 74 und im oberen Teilbereich 72 können abgerundete Übergangsbereiche 73 vorgesehen sein. Die Kanalbreite oder Breite b des Strömungskanals kann durch den weitesten Abstand der in Querrichtung Q einander diametral gegenüberliegenden Übergangsbereiche 73 zwischen oberem Teilbereich 72 oder Dach und unterem Teilbereich 74 oder Boden des Strömungskanals 7 festgelegt sein.

Die Kanalhöhe h kann durch den Abstand der Krümmungs-Scheitelpunkte von oberem Teilbereich 72 und unterem Teilbereich 74 festgelegt sein. Ein Verhältnis d3/h8 von einem Durchmesser d3 der Eingangsöffnung 3 relativ zu einer vertikalen Höhe h des Strömungskanals 7 an der Übergangsstelle beträgt beispielsweise etwa 1,54. Ein Verhältnis d3/h9 von einem Durchmesser d3 der Eingangsöffnung 3 relativ zu einer vertikalen Höhe h des Strömungskanals 7 am Scheitelunkt 9 beträgt beispielsweise etwa 1,55 oder mehr.

In der Abbildung des Strömungskanals 7 gemäß Figur 2 verläuft die Strömungsrichtung 11 von links nach rechts. In Strömungsrichtung F durchströmt das Prozessfluid nacheinander die Querschnittsflächen a-a, b-b, c-c, d-d, e-e, f-f und g-g. Anschließend fließt das Prozessfluid durch die Durchgangöffnung 5 zum Auslasskanal 27.

Die "Krümmung" des unteren Teils 74 und des oberen Teils 72 des Strömungskanals 7 bezeichnet die Krümmung in der jeweiligen Querschnittsebene, wie in den Figuren 3b bis 3e zu erkennen. Der untere Teilbereich 74 des Strömungskanals 7 hat in den Querschnitten kontinuierlich einen im Wesentlichen halbkreisförmigen Querschnitt. D. h., der Krümmungsradius des unteren Teilbereichs 74 entspricht im Wesentlichen der Hälfte der Kanalbreite b. Eine Abweichung des Krümmungsradius im unteren Teilbereich 74 des Strömungskanals 7 von der Hälfte der Kanalbreite kann ±50 % betragen.

Im oberen Teilbereich 72 des Strömungskanals 7 nimmt die Krümmung im Verlauf des Strömungskanals 7 in Flussrichtung F kontinuierlich ab. Die Querschnittsflächen des oberen Teilbereichs 72 des Strömungskanals 7 beträgt bereits kurz hinter dem Öffnungsquerschnitt Q3, nämlich in der Querschnittsebene b-b des Öffnungsquerschnitts Q71 im oberen Teilbereich 72 nur noch etwa die Hälfte der oberen Hälfte der Querschnittsfläche Q3 des Öffnungsquerschnitts. Etwas weiter kanalabwärts misst der obere Teil 72 der Querschnittsfläche Q73 wiederum nur noch etwa die Hälfte des oberen Teils 72 der vorigen Querschnittsfläche Q71. Weiter stromabwärts ist im Strömungsquerschnitt Q75 der obere Teil 72 relativ zu der vorherigen Querschnittsfläche Q73 wiederum auf etwa die Hälfte gesunken. Die Abnahme des oberen Teils 72 der Querschnittsfläche Q71, Q73, Q75 des Strömungskanals 7 macht im Wesentlichen die Abnahme der gesamten Querschnittsfläche des Strömungskanals 7 aus. Die Breite b der Querschnittsfläche Q71, Q73, Q75 im ersten Abschnitt 70 nimmt zu, jedoch in geringerem Maße als die Höhenabnahme des oberen Teils 72, sodass insgesamt die Querschnittsfläche Q71, Q73, Q75 im Verlauf des Strömungskanals 7 abnimmt.

Im zweiten Abschnitt 80 können die Querschnittsflächen Q81 und Q83 einen insgesamt im Wesentlichen halbkreisförmig sein. Die Querschnittsflächen Q81, Q83 im zweiten Abschnitt 80 können im Wesentlichen die gleiche Flächengröße ±5% aufweisen.

Im ersten Abschnitt 70 des Strömungskanals 7 nimmt dieser um etwa 20 % an Flächengröße bezogen auf die Flächengröße des Öffnungsquerschnitts Q3 ab. Der obere Krümmungsradius nimmt im ersten Abschnitt 70 des Strömungskanals 7 erheblich zu. In dem ersten Abschnitt 70 des Strömungskanals 7 kann der Krümmungsradius des oberen Teilbereichs 72 zumindest abschnittsweise wenigstens das Doppelte, wenigstens des vierfache, wenigstens das fünffache oder sogar wenigstens das Zehnfache der halben Kanalbreite b betragen. Im oberen Teilbereich 72 des Strömungskanals 7 verläuft die Krümmung entlang einer ununterbrochenen, kontinuierlich konstant gekrümmten Bogenkurve, die einen Teilkreis bildet. Im unteren Teilbereich 74 des Strömungskanals verläuft die untere Krümmung entlang einer ununterbrochenen, kontinuierlichen konstanten Krümmung, die eine Halbkreisbereich definiert. Ein Halbkreisbereich kann eine Querschnittsfläche bezeichnen, die im Wesentlichen halbkreisförmig ist. Eine im Wesentlichen halbkreisförmige Fläche kann insbesondere eine Fläche sein, die sich entlang einer Bogenkurve mit einem Bogenwinkel von 180° ±40° erstreckt.

Ein Teilkreisbereich bezeichnet im Rahmen der vorliegenden Anmeldung einen Teilbereich eines Kreises, der kleiner ist als ein Halbkreisbereich. Insbesondere kann ein Teilkreisbereich solche Kreisbereiche bezeichnen, die entlang einer Bogenweite oder einem Bogenwinkel erstrecken, der kleiner als 120 °, insbesondere kleiner als 90° oder sogar kleiner als 60 ° ist.

Der Strömungskanal 7 hat Übergangsabschnitte 73, in denen ein abgerundeter, radiusartiger Übergang zwischen oberem Teilbereich 72 und unterem Teilbereich 74 vorliegt, wobei die Bogenlänge eines Übergangsbereichs wesentlich, d. h. wenigstens um einen Faktor 5 oder um einen Faktor10 kleiner ist als die Bogenlänge des oberen Teilbereichs 72 und die Bogenlänge des unteren Teilbereich 74. Als Bogenlänge kann die Wegstrecke in Millimeter vom Anfang zum Ende einer kontinuierlich und konstant gekrümmten Bogenkurve bezeichnet sein.

Der erste Abschnitt 70 des Strömungskanals 7 erstreckt sich von der Eingangsöffnung 3 bis zu einer Übergangsstelle 8, an der der Strömungskanal 7 eine Strömungsquerschnittsfläche kleinster Flächengröße aufweist. Die kleinste Flächengröße kann ein lokales Minimum der Flächengröße entlang des Strömungsverlaufs S zwischen den der Eingangsöffnung 3 und der Durchgangsöffnung 5, oder ein absolutes Minimum der Flächengröße des Strömungskanals 7 zwischen der Eingangsöffnung 3 und der Durchgangsöffnung 5 bezeichnen. An der Übergangsstelle 8 kann die Querschnittsfläche Q77 des Strömungskanals 7 einen flachen oder konkav ins Innere des Kanals 7 gewölbten oberen Teilbereich (Dach) aufweisen. Im ersten Abschnitt 70 des Strömungskanals 7 kann vorzugsweise der obere Teilbereich und der untere Teilbereich 74 konvex von der Strömungsmittelpunktlinie S Weg gekrümmt sein.

In Strömungsrichtung F hinter der Übergangsstelle 8 kann der obere Teilbereich 82 in dem zweiten Abschnitt 80 flach sein oder sich im Wesentlichen flach mit geringfügigen Abweichungen zu einer planaren Erstreckung in einer horizontalen Ebene, insbesondere parallel zu einer Durchgangsebene der Durchgangöffnungen 5, erstrecken.

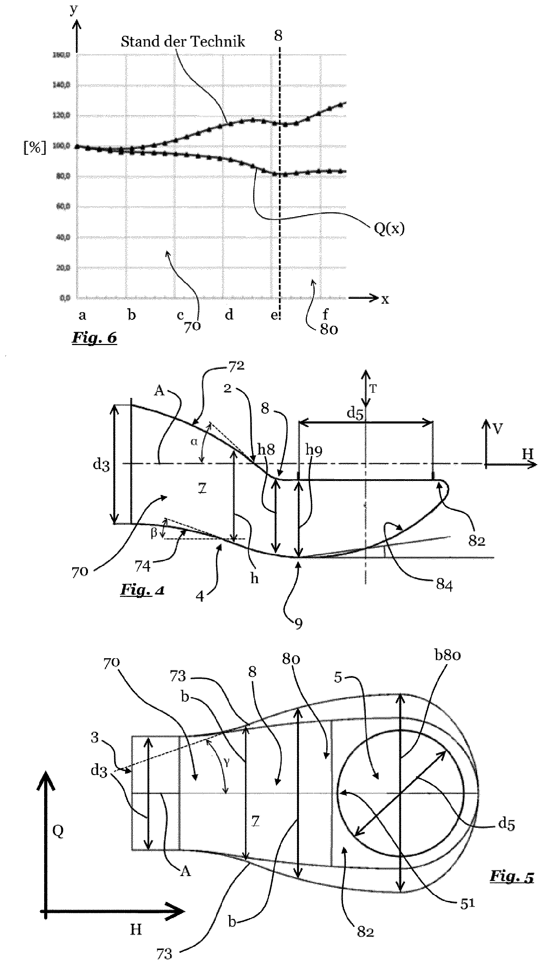

Die untere Teilbereiche 74, 84 sinken zunächst ausgehend von der Eingangsöffnung 3 in Vertikalrichtung V nach unten ab, bis hin zu einem untersten Scheitelpunkt 9. Der Scheitelpunkt 9 befindet sich in Strömungsrichtung F hinter der Übergangsstelle 8. Der Scheitelpunkt 9 befindet sich in Strömungsrichtung F vor der Mittelpunktlinie oder transversalen T in Vertikalrichtung V durch den Mittelpunkt der Durchgangsöffnung 5. Gemäß einer bevorzugten Ausführung, die in Figur 4 dargestellt ist, kann sich der Scheitelpunkt 9 insbesondere unmittelbar in Vertikalrichtung unterhalb des (in Horizontalrichtung H) vorderen Endes 51 der Durchgangsöffnung 5 befinden. Im Gegensatz zu konventionellen Hubventilen, bei denen sich der Scheitelpunkt 9 üblicherweise unmittelbar vertikal unterhalb der Mittelpunktlinie durch die Durchgangsöffnung 5 befindet hat sich gezeigt, dass eine Verschiebung des Scheitelpunktes 9 in Richtung der Eingangsöffnung 3 eine Verringerung von Strömungsablösung zur Folge haben kann.

Die Querschnittsbreite des Strömungskanals 7 kann in Strömungsrichtung F zumindest abschnittsweise insbesondere kontinuierlich, besonders bevorzugt stetig, von der Eingangsöffnung 3 bis zum Mittelpunkt der Durchgangsöffnung 5 zunehmen. Es kann bevorzugt sein, dass der Strömungskanal 7 in einem kurzen Eingangsbereich unmittelbar hinter der Eingangsöffnung 3 eine konstante Kanalbreite b entsprechend dem Einlassdurchmesser d3 aufweist. Im ersten Abschnitt 70 und im zweiten Abschnitt 80 des Strömungskanals 7 kann die Kanalbreite b bis hin zu einem Maximum b8o im Bereich der Durchgangsöffnung 5 wachsen. Ein Verhältnis vom Durchmesser d3 der Eingangsöffnung relativ zu der Maximalbreite b80 des Strömungskanals beträgt etwa 0,75. Die Verbreiterung der Breite b des Strömungskanals 7 kann durch ein Verbreiterungswinkel γ charakterisiert sein, die etwa 20° ±10° betragen kann. Der Verbreiterungswinkel γ kann den Winkel zwischen der Ventilachse A und einer vertikalen Projektion des Übergangsbereichs 73 auf eine horizontale Ebene entsprechend Figur 5 bezeichnen.

Im ersten Abschnitt 70 des Strömungskanals 7 ausgehend von der Eingangsöffnung 3 verläuft der Strömungskanal 70 kontinuierlich und stetig in Vertikalrichtung V nach unten geneigt in Richtung des Scheitelpunktes 9. Es kann bevorzugt sein, dass der obere Teilbereich 72 des Strömungskanals 7 einen stärkeren oberen Neigungswinkel α als den unteren Neigungswinkel β am Boden bzw. unteren Teilbereich 74 des Strömungskanals 7 aufweist. Der obere Neigungswinkel α des Strömungskanals 7 kann im Wesentlichen 45° ±5° relativ zu einer horizontalen H betragen. Insbesondere kann der obere Neigungswinkel α den Neigungswinkel an einem Schnittpunkt 2 zwischen der Ventilachse A durch den Mittelpunkt der Öffnung 3 mit der Wandlung des oberen Teilbereichs 72 des Strömungskanals 7 bezeichnen.

Der unteren Neigungswinkel β kann 20° ±10° relativ zu einer horizontalen H betragen. Alternativ kann der untere Neigungswinkel β kann 25° ±5° relativ zu einer horizontalen H betragen. Insbesondere kann der untere Neigungswinkel kleiner als 25 ° sein, beispielsweise 20°±3°. Insbesondere kann der unteren Neigungswinkel an einem Wendepunkt 4 bestimmt sein, an dem eine Wölbung des unteren Teilbereichs 74 des Strömungskanals 7 von einer konkaven Wölbung bezogen auf die Ventilachse Art zu einer konvexen Wölbung bezogen auf die Ventilachse wendet. Im Unterschied zu dem zuvor verwendeten Begriff "Krümmung", welcher die Gestalt der Kanalwandung in einem Querschnitt senkrecht auf der Ventilachse A bzw. senkrecht auf der Strömungsmittelpunktlinie S bezeichnend, bezeichnet der Begriff "Wölbung" die Gestalt des Strömungskanals 7 in einer Querschnittsebene entsprechend Figur 4, die in Vertikalrichtung V und Horizontalrichtung H aufgespannt ist. So ist der Scheitelpunkt 9 ein konvexer Scheitelpunkt der Wölbung bezogen auf die Ventilachse. Die untere Teilbereich 84 im zweiten Abschnitt 80 Strömungskanals 7 kann vollständig konvex gewölbt sein.

Figur 6 zeigt in einem schematischen Diagramm die Flächengröße Q(x) abhängig von einem Abstand x entlang der Strömungsmittelpunktlinie S ausgehend von der Eingangsöffnung 3 zur Durchgangsöffnung 5. Die Flächengröße des Strömungsquerschnitts Q(x) des erfindungsgemäßen Hubventils 1 an der Einlassöffnung 3 definiert 100 %. Im ersten Abschnitt 70 des Strömungskanals 7 nimmt die Flächengröße bis zu der Übergangsstelle 8 kontinuierlich ab. Bei der exemplarischen Ausführung gemäß Figur 6 bleibt die Flächengröße Q(x) des Strömungskanals 7 im zweiten Abschnitt 80 im Wesentlichen gleich groß oder steigt leicht an. Ein Minimum der Flächengröße des Strömungskanals 7 liegt an der Übergangsstelle 8 vor. In dem Diagramm gemäß Figur 6 bezeichnet die y-Achse die Flächengröße in Prozent der Flächengröße der Eingangsöffnung 3. Die x-Achse des Diagramms gemäß Figur 6 beschreibt schematisch den Abstand des Querschnitts Q von der Eingangsöffnung 3.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung insoweit die Merkmalskombinationen unter den Schutzumfang der Patentansprüche fallen.

### Bezugszeichenliste

- 1: Hubventil
- 2: Ventilgehäuse
- 3: kreisförmige Einlassöffnung
- 4: Wendepunkt
- 5: kreisförmige Durchgangöffnung
- 6: Austrittsöffnung
- 7: Strömungskanal
- 8: Übergangsstelle
- 9: Scheitelpunkt
- 11: Ventilglied
- 13: Ventilstange
- 21: Deckel
- 24: ringförmigen Ventilsitz
- 27: Auslasskanal
- 51: vorderes Ende
- 70, 80: Bereich
- 72: oberer Teilbereich
- 73: Übergangsbereiche
- 74, 84: unterer Teilbereich
- 82: oberer Teilbereich
- A: Ventilachse
- b: Kanalbreite
- b80: Maximum
- F: Strömungsrichtung
- H: Horizontalrichtung
- h: Kanalhöhe
- Q: Querrichtung
- Q3, Q71, Q73, Q75, Q77, Q81, Q83: Öffnungsquerschnitt
- Q(x): Flächengröße
- S: Strömungsverlauf
- T: Transversalbewegung
- V: ringförmigen Ventilsitz
- d3/h8, d3/h9: Verhältnis
- d3: Durchmesser
- a-a, b-b, c-c, d-d, e-e, f-f, g-g: Querschnittsflächen
- α: oberer Neigungswinkel
- β: unterer Neigungswinkel
- γ: Verbreiterungswinkel

## Patentansprüche

1. Hubventil (1) zum Steuern einer Prozessfluidströmung einer prozesstechnischen Anlage, umfassend
eine Eingangsöffnung (3) mit kreisförmigem Öffnungsquerschnitt (Q3), die eine Ventilachse (A) definiert,
ein Hubventilglied (11), das in einer Vertikalrichtung (V) quer, also senkrecht, zur Ventilachse (A) beweglich ist und das mittels einer in Vertikalrichtung (V) über dem Ventilglied (11) angeordneten Ventilstange (13) an einem Aktor zum Betätigen des Hubventilglieds (11) anbindbar ist,
eine Durchgangsöffnung (5) mit kreisförmigem Durchgangsöffnungsquerschnitt wobei das Hubventilglied (11) die Durchgangsöffnung (5) in einer in Vertikalrichtung (V) untersten Betätigungsstellung verschließt, und
einem Strömungskanal (7), der sich von der Eingangsöffnung zu der Durchgangsöffnung (5) erstreckt und einen Strömungsquerschnitt (Q71, Q73, Q75, Q77, Q81, Q83) definiert,
**dadurch gekennzeichnet, dass**
die Flächengröße des Strömungsquerschnitts (Q71, Q73, Q75, ) in einem ersten Abschnitt (70) von der Eingangsöffnung (3) in einer Strömungsrichtung (F) zu einer Übergangsstelle (8) sinkt, wobei der Strömungsquerschnitt (Q71, Q73, Q75,) in dem ersten Abschnitt (70) kontinuierlich oval geformt ist und wobei der erste Abschnitt (70) des Strömungskanals (7) kontinuierlich in Vertikalrichtung (V) nach unten geneigt ist.

2. Hubventil (1) nach Anspruch 1, wobei im ersten Abschnitt (70) im Verlauf des Strömungskanals (7) in Strömungsrichtung (F) die Höhe des Strömungskanals in Vertikalrichtung (V) kontinuierlich abnimmt und die Breite des Strömungskanals in einer Querrichtung (Q) quer zur Vertikalrichtung (V) und zur Ventilachse (A) kontinuierlich zunimmt.

3. Hubventil (1) nach Anspruch 1 oder 2, wobei der erste Abschnitt (70) des Strömungskanals (7) einen unteren Neigungswinkel (β) von etwa 25° oder weniger aufweist.

4. Hubventil (1) nach einem der vorstehenden Ansprüche, wobei im zweiten Abschnitt (80) im Verlauf des Strömungskanals (7) in Strömungsrichtung (F) die Breite des Strömungskanals der Querrichtung (Q) bis zu einer Maximalbreite (b80), die insbesondere im Bereich der Durchgangsöffnung (5) angeordnet ist, kontinuierlich zunimmt.

5. Hubventil (1) Anspruch 4, wobei ein Verhältnis von einem Durchmesser (d3) der Eingangsöffnung relativ zu der Maximalbreite (b80) des Strömungskanals (7) wenigstens 0,75 ±0,05 beträgt.

6. Hubventil (1) nach einem der vorstehenden Ansprüche, wobei der Strömungsquerschnitt (Q71, Q73, Q75) im ersten Abschnitt (70) eine Verkleinerung der Flächengröße relativ zur Flächengröße des Öffnungsquerschnitts um wenigstens 10% und/oder höchstens 30%, vorzugsweise um 20%, erfährt.

7. Hubventil (1) nach einem der vorstehenden Ansprüche, wobei ein Verhältnis von einem Durchmesser (d3) der Eingangsöffnung relativ zu einer vertikalen Höhe (h8) des Strömungskanals (7) an der Übergangsstelle (8) wenigstens 1,55 ±0,10, beträgt und/oder wobei ein Verhältnis von einem Durchmesser (d3) der Eingangsöffnung relativ zu einer vertikalen Höhe (h9) des Strömungskanals (7) am Scheitelpunkt (9) wenigstens 1,55 ±0,10, beträgt.

8. Hubventil (1) nach einem der vorstehenden Ansprüche, wobei der Strömungskanal (7) einen in Vertikalrichtung (V) oberen Teilbereich (72) hat, der im Verlauf des Strömungskanals (7) in Strömungsrichtung (F) im ersten Abschnitt (70) eine abnehmende Flächengröße aufweist, wobei insbesondere die Abnahme der Flächengröße im oberen Teilbereich (72) des Strömungskanals (7) die gesamte Abnahme der Flächengröße des Strömungskanals (7) im ersten Abschnitt (70) bestimmt.

9. Hubventil (1) nach einem der vorstehenden Ansprüche, wobei der Strömungsquerschnitt (Q71, Q73, Q75) im ersten Abschnitt (70) zumindest abschnittsweise Teilkreisförmig ist und wobei im ersten Abschnitt (70) im Verlauf des Strömungskanals (7) in Strömungsrichtung (F) zumindest abschnittsweise im oberen Teilbereich (72) eine Teilkreis-Krümmung des Strömungsquerschnitts (Q71, Q73, Q75) abflacht.

10. Hubventil (1) nach Anspruch 8 oder 9, wobei der Strömungsquerschnitt (Q77) an der Übergangsstelle (8) im oberen Teilbereich (72) des Strömungskanals (7) konkav ist.

11. Hubventil (1) nach einem der vorstehenden Ansprüche, wobei der Strömungskanal (7) einen in Vertikalrichtung (V) unteren Teilbereich (74) hat, der im Verlauf des Strömungskanals (7) in Strömungsrichtung (F) kontinuierlich halbkreisförmig ist.

12. Hubventil (1) nach einem der vorstehenden Ansprüche, wobei der Strömungskanal (7) einen in Vertikalrichtung (V) untersten Scheitelpunkt (9) aufweist, der in Horizontalrichtung (H) von einer Geraden in Vertikalrichtung (V) durch den Mittelpunkt der Durchströmungsöffnung (5) versetzt angeordnet ist, wobei insbesondere der Scheitelpunkt (9) an einem in Horizontalrichtung (H) vorderem Ende (51) der Durchgangsöffnung (5) oder in Horizontalrichtung (H) zwischen vorderem Ende (51) der Durchgangsöffnung (5) und der Geraden in Vertikalrichtung (V) durch den Mittelpunkt der Durchströmungsöffnung (5) angeordnet ist.

## Claims

1. Globe valve (1) for controlling a process fluid flow of a processing plant, comprising an inlet opening (3) with a circular shaped opening cross section (Q3) which defines a valve axis (A),
a globe valve member (11) which is movable in a vertical direction (V) transversely, namely perpendicularly, to the valve axis (A) and which can be connected by means of a valve rod (13) located in the vertical direction (V) above the globe valve member (11) to an actuator for actuating the globe valve member (11),
a passage opening (5) with a circular shaped passage opening (5) cross section (Q3), wherein the globe valve member (11) closes the passage opening (5) in a in the vertical direction (V) lowest actuating position, and
a flow channel (7) which extends from the inlet opening (3) to the passage opening (5) and defines a flow cross section (Q71, Q73, Q75, Q77, Q81, Q83), **characterised in that**
the surface size of the flow cross section (Q71, Q73, Q75) decreases in a first section (70) from the inlet opening (3) in a flow direction (F) to a transition point (8), wherein the flow cross section (Q71, Q73, Q75) in the first section (70) is continuously oval shaped and wherein the first section (70) of the flow channel (7) is continuously inclined downwards in the vertical direction (V).

2. Globe valve (1) according to claim 1, wherein in the first section (70) in the course of the flow channel (7) in flow direction (F), the height of the flow channel (7) in vertical direction (V) continuously decreases and the width of the flow channel (7) in a transverse direction (Q) transverse to the vertical direction (V) and to the valve axis (A) continuously increases.

3. Globe valve (1) according to claim 1 or 2, wherein the first section (70) of the flow channel (7) comprises a lower inclination angle (β) of about 25° or less.

4. Globe valve (1) according to one of the preceding claims, wherein in a second section (80) in the course of the flow channel (7) in flow direction (F), the width of the flow channel (7) in a transverse direction (Q) continuously increases up to a maximum width (b80) which is in particular located in the area of the passage opening (5).

5. Globe valve (1) according to claim 4, wherein a ratio of a diameter (d3) of the inlet opening relative to the maximal width (b80) of the flow channel (7) is at least 0,75 ± 0,05.

6. Globe valve (1) according to one of the preceding claims, wherein the flow cross section (Q71, Q73, Q75) in the first section (70) undergoes a reduction of the surface size relative to the surface size of the opening cross section of at least 10% and/or of maximally 30%, preferably about 20%.

7. Globe valve (1) according to one of the preceding claims, wherein a ratio of a diameter (d3) of the inlet opening (3) relative to a vertical height (h8) of the flow channel (7) at the transition point (8) is at least 1,55 ± 0,10, and/or wherein a ratio of a diameter (d3) of the inlet opening relative to a vertical height (h9) of the flow channel (7) at a vertex (9) is at least 1,55 ± 0,10.

8. Globe valve (1) according to one of the preceding claims, wherein the flow channel (7) comprises an in vertical direction (V) upper subarea (72) which comprises in the course of the flow channel (7) in flow direction (F) in the first section (70) a decreasing surface size, wherein in particular the decrease of the surface size in the upper subarea (72) of the flow channel (7) determines the entire decrease of the surface size of the flow channel (7) in the first section (70).

9. Globe valve (1) according to one of the preceding claims, wherein the flow cross section (Q71, Q73, Q75) in the first section (70) is at least in sections partial circular shaped and wherein in the first section (70) in the course of the flow channel (7) in flow direction (F) a partial circular curvature of the flow cross section (Q71, Q73, Q75) flattens at least in sections in the upper subarea (72).

10. Globe valve (1) according to claim 8 or 9, wherein the flow cross section (Q77) at the transition point (8) in the upper subarea (72) of the flow channel (7) is concave.

11. Globe valve (1) according to one of the preceding claims, wherein the flow channel (7) comprises an in vertical direction (V) lower subarea (74) which is in the course of the flow channel (7) in flow direction (F) continuously half circular shaped.

12. Globe valve (1) according to one of the preceding claims, wherein the flow channel (7) comprises an in vertical direction (V) lowest vertex (9) which is in horizontal direction (H) located offset from a straight line extending in vertical direction (V) through the centre point of the passage opening (5), wherein in particular the vertex (9) is located at an in horizontal direction (H) front end of the passage opening (5) or in horizontal direction (H) between a front end (51) of the passage opening (5) and the straight line extending in vertical direction (V) through the centre point of the passage opening (5).

## Revendications

1. Soupape de levage (1) pour commander un écoulement de fluide de processus d'une installation technique de processus, comprenant une ouverture d'entrée (3) avec section d'ouverture circulaire (Q3), qui définit un axe de soupape (A),
un organe de soupape de levage (11), qui est mobile transversalement dans une direction verticale (V) donc perpendiculairement à l'axe de soupape (A) et qui peut être relié par le biais d'une tige de soupape (13) disposée en direction verticale (V) au-dessus de l'organe de soupape (11) sur un actionneur pour actionner l'organe de soupape de levage (11),
une ouverture de passage (5) avec section d'ouverture de passage circulaire, sachant que l'organe de soupape de levage (11) ferme l'ouverture de passage (5) dans une position d'actionnement la plus basse en direction verticale (V) et un conduit d'écoulement (7), qui s'étend de l'ouverture d'entrée à l'ouverture de passage (5) et définit une section d'écoulement (Q71, Q73, Q75, Q77, Q81, Q83), **caractérisée en ce que**
la taille de surface de la section d'écoulement (Q71, Q73, Q75) baisse dans une première section (70) de l'ouverture d'entrée (3) dans une direction d'écoulement (F) à un emplacement de transition (8), sachant que la section d'écoulement (Q71, Q73, Q75) est formée de façon ovale en continu dans la première section (70) et sachant que la première section (70) du conduit d'écoulement (7) est inclinée vers le bas en continu en direction verticale (V).

2. Soupape de levage (1) selon la revendication 1, sachant que dans la première section (70) dans le tracé du conduit d'écoulement (7) en direction d'écoulement (F), la hauteur du conduit d'écoulement diminue en continu en direction verticale (V) et la largeur du conduit d'écoulement augmente dans une direction transversale (Q) transversalement à la direction verticale (V) et à l'axe de soupape (A).

3. Soupape de levage (1) selon la revendication 1 ou 2, sachant que la première section (70) du conduit d'écoulement (7) comporte un angle d'inclinaison inférieur (β) d'environ 25° ou moins.

4. Soupape de levage (1) selon l'une quelconque des revendications précédentes, sachant que dans la deuxième section (80) dans le tracé du conduit d'écoulement (7) en direction d'écoulement (F), la largeur du conduit d'écoulement de la direction transversale (Q) augmente en continu jusqu'à une largeur maximale (b80), qui est disposée en particulier dans la zone de l'ouverture de passage (5).

5. Soupape de levage (1) selon la revendication 4, sachant qu'un rapport entre un diamètre (d3) de l'ouverture d'entrée et la largeur maximale (b80) du conduit d'écoulement (7) est au minimum de 0,75 ± 0,05.

6. Soupape de levage (1) selon l'une quelconque des revendications précédentes, sachant que la section d'écoulement (Q71, Q73, Q75 subit dans la première section (70) une réduction de la taille de surface par rapport à la taille de surface de la section d'ouverture d'au moins 10 % et/ou au maximum de 30 %, de préférence de 20 %.

7. Soupape de levage (1) selon l'une quelconque des revendications précédentes, sachant qu'un rapport entre un diamètre (d3) de l'ouverture d'entrée et une hauteur verticale (h8) du conduit d'écoulement (7) à l'emplacement de transition (8) est au moins de 1,55 ± 0,10 et/ou sachant qu'un rapport entre un diamètre (d3) de l'ouverture d'entrée et une hauteur verticale (h9) du conduit d'écoulement (7) au point culminant (9) est au moins de 1,55 ± 0,10.

8. Soupape de levage (1) selon l'une quelconque des revendications précédentes, sachant que le conduit d'écoulement (7) possède une partie de zone supérieure (72) en direction verticale (V), qui comporte une taille de surface décroissante dans le tracé du conduit d'écoulement (7) en direction d'écoulement (F) dans la première section (70), sachant en particulier que la diminution de la taille de surface dans la partie de zone supérieure (72) du conduit d'écoulement (7) détermine toute la diminution de la taille de surface du conduit d'écoulement (7) dans la première section (70).

9. Soupape de levage (1) selon l'une quelconque des revendications précédentes, sachant que la section transversale d'écoulement (Q71, Q73, Q75) dans la première section (70) est au moins en partie en forme de cercle partiel et sachant que dans la première section (70) dans le tracé du conduit d'écoulement (7) en direction d'écoulement (F) aplatit au moins en partie dans la partie de zone supérieure (72) une courbure de cercle partiel de la section d'écoulement (Q71, Q73, Q75).

10. Soupape de levage (1) selon la revendication 8 ou 9, sachant que la section transversale d'écoulement (Q77) est concave à l'emplacement de transition (8) dans la partie de zone supérieure (72) du conduit d'écoulement (7).

11. Soupape de levage (1) selon l'une quelconque des revendications précédentes, sachant que le conduit d'écoulement (7) possède en direction verticale (V) une partie de zone inférieure (74), qui est en continu en forme de demi-cercle dans le tracé du conduit d'écoulement (7) en direction d'écoulement (F).

12. Soupape de levage (1) selon l'une quelconque des revendications précédentes, sachant que le conduit d'écoulement (7) comporte dans la direction verticale (V) un point culminant le plus bas (9), qui est disposé dans la direction horizontale (H) d'une droite en direction verticale (V) déporté à travers le point médian de l'ouverture d'écoulement (5), sachant en particulier que le point culminant (9) est disposé à une extrémité avant (51) en direction horizontale (H) de l'ouverture de passage (5) ou en direction horizontale (H) entre l'extrémité avant (51) de l'ouverture de passage (5) et la droite en direction verticale (V) à travers le point médian de l'ouverture d'écoulement (5).
